# EUROPEAN PATENT APPLICATION

(11) **EP 3 266 592 A1**
(43) Date of publication of application: **10.01.2018**
(21) Application number: 15884235.1
(22) Date of filing: 10.03.2015
(51) Int. Cl.: B29C 67/00, B33Y 30/00

(54) **VAMP 3D-PRINTING SYSTEM**

(71) Applicant: Orisol Asia Ltd., Chang Hwa (TW)
(72) Inventor: MAKOVER, Jakov, 71908 Maccabim (IL); MARDIX, Bar Cochva, Tel Aviv (IL); SADEH, Yaacov, 76656 Rechovot (IL)
(74) Representative: Lang, Christian
(86) International application number: PCT/CN2015/073950
(87) International publication number: WO 2016/141552

(57) **Abstract**

Disclosed is a vamp 3D-printing system. Mainly, by using a 3D-printing device comprising at least one fixed printing head and a rotatable printing head, printable materials are overlapped and printed on a vamp assembly by means of cooperation of the fixed printing head and the rotatable printing head according to a preset printing program of a computer. In this way, the technical effects are achieved that vamp pattern styles having thick and thin line changes and high precision of printing positions are printed by using more two printing heads; in addition, manufacturing costs are actually reduced and manufacturing procedures are actually simplified by applying the 3D-printing technology to printing of vamp pattern styles.

## Description

### BACKGROUND

### Field of the Invention

The present invention relates to a 3D-printing system, and more particularly to a vamp 3D-printing system.

### Related Prior Art

The patterns on a simple vamp or a vamp of a sports shoe are normally formed by the following method, firstly, TPU or other plastic sheet materials are die cut into welts of desired thickness, and then the welts are adhered to the vamp by manual or integrally formed on the vamp by in-mold forming, so as to form versatile patterns. Or, the vamp can also be partially or fully coated with TPU or other plastic coating according to the design of the shoe. The current method for forming the coating is to produce a steel stencil with a desired pattern, then the steel stencil is filled with TPU material and pressed against the vamp, the TPU coating is pressed onto the vamp by heat and pressure, and thus the vamp with desired patterns is obtained.

However, different metal stencils of different sizes and patterns must be made in order to produce coatings of different patterns. Not only does the process of preparing the template cost the overall manufacturing time and cost, but the melted TPU is difficult to be precisely pressed at the desired position on the vamp. Therefore, the existing vamp pattern making method has the problems of high cost and complicated working procedure, and has room for improvement.

The present invention has arisen to mitigate and/or obviate the afore-described disadvantages.

### SUMMARY

One objective of the present invention is to provide a vamp 3D-printing system. Mainly, by using a 3D-printing device comprising at least one fixed printing head and a rotatable printing head, printable materials are overlapped and printed on a vamp assembly by means of cooperation of the fixed printing head and the rotatable printing head according to a preset printing program of a computer. In this way, the technical effects are achieved that vamp pattern styles having thick and thin line changes and high precision of printing positions are printed by using more two printing heads; in addition, manufacturing costs are actually reduced and manufacturing procedures are actually simplified by applying the 3D-printing technology to printing of vamp pattern styles.

To solve the aforementioned problem, the present invention provides a vamp 3D-printing system which is used to perform 3D printing on a plurality of vamps, and comprises a conveying device, a movable device, and a printing device electrically connected to a computer, wherein the conveying device includes a conveying belt, a direction extending between two ends of the conveying belt is defined as X, the vamps are conveyed in the direction X; the movable device includes a bridge frame bridging over the conveying belt, and a slide mechanism hung above the conveying belt by the bridge frame, an operating direction of the slide mechanism is defined as a direction Y; characterized in that: the printing device includes a lifting mechanism connected to the slide mechanism, a mounting seat connected to and moved together with the lifting mechanism, a motor mounted on the mounting seat, at least one fixed printing head, and at least one rotatable printing head, the fixed printing head includes a spray nozzle with an opening, the opening has a round shape, the rotatable printing head includes a spray nozzle with an opening in the form of a slit, the motor includes a drive shaft with a drive toothed portion at one end of the drive shaft, the rotatable printing head includes a driven toothed portion, the motor drives the rotatable printing head to rotate via the engagement of the drive toothed portion with the driven toothed portion, the lifting mechanism has an operating direction defined as a direction Z, the lifting mechanism moves in the direction Y along with the slide mechanism, the motor, the fixed printing head and the rotatable printing head move in the direction Y or Z along with the lifting mechanism via the mounting seat. By such arrangements, the computer controls the slide mechanism and the lifting mechanism to drive the fixed printing head, the rotatable printing head to move to a position aligned to the vamps, so as to print a 3D-printing layer on each of the vamps.

In the above vamp 3D-printing system, the conveying belt of the conveying device is provided with a roller at one end and a drive motor at another end thereof, and the conveying belt is driven by the drive motor to move the vamps in the direction X; the slide mechanism of the movable device includes a rail mounted on the bridge frame and a motor disposed at one end of the rail which extends in the direction Y, and serves to drive the mounting seat, and the printing head and the rotatable printing head mounted on the mounting seat to move along the direction Y. The lifting mechanism includes a ball screw extending in the direction Z and a servo motor rotating the ball screw, the mounting seat is connected to the ball screw and moves in the direction Z.

The vamp 3D-printing system further comprises a fixing device fixed on the conveying device to carry the vamps. The fixing device includes a retaining member fixed to the conveying belt by a plurality of fixing members, so that the vamps are fixed on the retaining member and moved in the direction X. The computer is electrically connected to the drive motor of the conveying device, the slide mechanism of the movable device, and the lifting mechanism, the motor, the fixed printing head and the rotatable printing head of the printing device, the computer controls the conveying speed at which the vamps are conveyed by the conveying device by controlling rotation speed of the drive motor of the conveying device and the motor of the slide mechanism, so as to cooperate with the lifting mechanism of the printing device to lift or lower the fixed printing head and the rotatable printing head to perform 3D printing.

Or, the vamp 3D-printing system can be provided with a camera disposed on the conveying belt to allow the computer to calculate the position and direction of the vamps to perform printing process. The camera is hung above the conveying belt of the conveying device by a suspension bracket to scan the vamps entering the camera's video taking range, so as to obtain location information of each of the vamps on the conveying device. By such arrangement, the computer is electrically connected to the drive motor of the conveying device, the slide mechanism of the movable device, the camera, and the lifting mechanism, the motor, the fixed printing head and the rotatable printing head of the printing device, the computer receives the location information, and calculates and processes the location information by the use of an image processing software, so as to create a coordinate instruction for turning on the drive motor of the conveying device, and a printing-path instruction for instructing the motor of the slide mechanism and the fixed printing head and the rotatable printing head of the lifting mechanism to perform 3D printing, the computer controls the conveying speed at which the vamps are conveyed by the conveying device by controlling rotation speed of the drive motor of the conveying device and the motor of the slide mechanism, so as to cooperate with the lifting mechanism of the printing device to lift or lower the fixed printing head and the rotatable printing head to perform 3D printing.

To solve the aforementioned problem, the present invention provides a vamp 3D-printing system used to perform 3D printing on a plurality of vamps, comprising a work table, a printing device, and a two-dimensional slide device electrically connected to a computer, the work table includes a work surface and a cantilever hung above the work surface, the printing device is disposed at one end of the cantilever, the two-dimensional slide device includes a first slide assembly and a second slide assembly perpendicular to the first slide assembly, an operating direction of the first slide assembly is defined as a direction Y, an operation direction of the second slide assembly is defined as a direction X, the second slide assembly is disposed on and moves along with the first slide assembly, a retaining member for carrying the vamps is fixed at one side of the second slide assembly, and is driven by the first and second slide assemblies to move on the work surface in a two dimensional manner along the directions X and Y. The printing system includes a lifting mechanism disposed at one end of the cantilever. By such arrangements, the computer controls the lifting and lowering of the fixed printing head and the rotatable printing head, and controls the first and second slide assemblies to move each of the vamps to a position aligned to the fixed and rotatable printing heads of the printing device, so as to print a 3D-printing layer on each of the vamps.

In the above vamp 3D-printing system, the first slide assembly of the two-dimensional slide device includes two parallel rails disposed on the work surface of the work table, a slide plate has two ends connected to the two rails via two slide blocks disposed at two ends of the slide plate, the first slide assembly includes a power source disposed on the work surface and connected to a middle section of the slide plate, so that the slide plate is driven by the power source to slide along the two rails, the second slide assembly includes a rail disposed on the slide plate of the first slide assembly, the retaining member is a slab structure and provided with two quick-release assemblies at a lateral edge thereof, so that the retaining member is connected to the rail by the two quick-release assemblies in a quick-lease manner, a power source is disposed at one end of the rail to drive the retaining member to move along the rail.

The power source of the first slide assembly is a ball screw and includes a motor driving a screw to rotate with respect to a nut disposed at a bottom of the middle section of the slide plate, causing a slide displacement of the slide plate along the rails, and the slide plate of the first slide assembly is provided with two assembling portions at two ends thereof for connecting to two ends of the rail.

The printing device is provided several fixed printing heads, and the spray nozzles of the printing heads have different openings of different diameters, so as to print lines of different thicknesses.

The printable material used by the vamp 3D-printing system is adhesive, primer or thermoplastic polyurethane elastomer.

The printing layer printed on the vamps by the vamp 3D-printing system has a thickness up to 0.3 mm.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there are illustrated preferred embodiments of the invention.

### BRIEF DESCRIPTION OF THE DRAWINGS

Fig. 1 shows a vamp 3D-printing system in accordance with a first preferred embodiment of the invention;
Fig. 2 shows a vamp 3D-printing system in accordance with a first preferred embodiment of the invention;
Fig. 3 shows a vamp 3D-printing system in accordance with a first preferred embodiment of the invention; and
Fig. 4 shows the detailed structure of the printing device 40 of the vamp 3D-printing system of the invention.

### DETAILED DESCRIPTION

The present invention will be clearer from the following description when viewed together with the accompanying drawings, which show, for purpose of illustrations only, the preferred embodiment in accordance with the present invention.

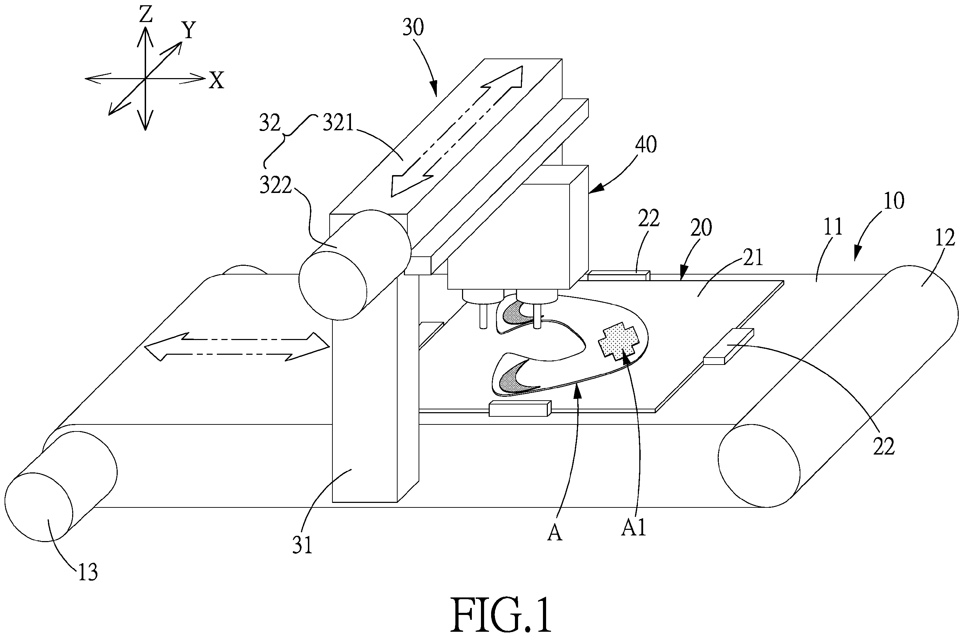

Referring to Figs. 1-4, a vamp 3D-printing system in accordance with the preferred embodiment of the invention is shown.

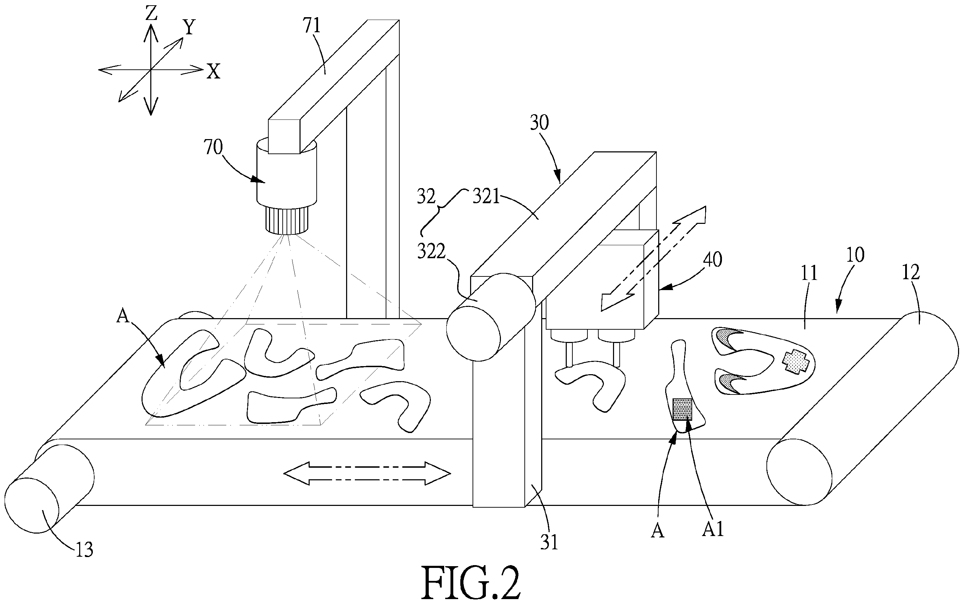

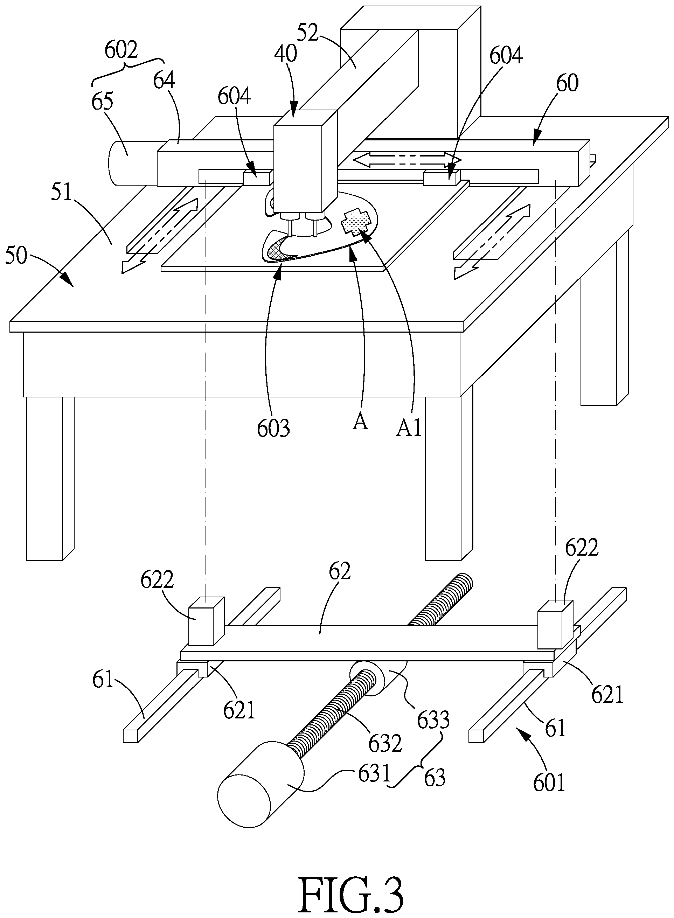

The vamp 3D-printing system of the invention, as shown in Figs. 1 and 2, is used to perform 3D printing on a plurality of vamps A carried on a conveyor, or as shown in Fig. 3, is used to perform 3D printing on a vamp A which is position adjustably placed on a working table.

Referring to Figs. 1, 2 and 4, which show a first embodiment and a second embodiment of the vamp 3D-printing system of the invention, respectively, in the first and second embodiments, the printing system includes: a conveying device 10, a movable device 30, and a printing device 40 electrically connected to a computer (not shown). In the first embodiment, a fixing device 20 whose position and direction are known is provided on the conveying device 10, and the vamp A is placed on the fixing device 20, then the computer can calculate the printing path of the printing device 40 based on the preset position and direction of the fixing device 20. In the second embodiment, a camera 70 is hung above the conveying device 10, so that the computer can calculate the printing path of the printing device 40 based on the image data of the camera 70.

As shown in Fig. 1, the conveying device 10 includes a conveying belt 11 with two ends, one end is provided with a roller 12, and another end is provided with a drive motor 13. A direction extending between the two ends of the conveying belt 11 is defined as X. The conveying belt 11 is driven by the drive motor 13 to move the vamp A in the direction X. The fixing device 20 is fixed on the conveying belt 11 to carry the vamp A, and includes a retaining member 21 fixed to the conveying belt 11 by a plurality of fixing members 22, so that the vamp A can be placed on the retaining member 21 and moved in the direction X. The movable device 30 includes a bridge frame 31 bridging over the conveying belt 11, and a slide mechanism 32 hung above the conveying belt 11 by the bridge frame 31. An operating direction of the slide mechanism 32 is defined as a direction Y. The slide mechanism 32 includes a rail 321 mounted on the bridge frame 31 and a motor 322 disposed at one end of the rail 321. The rail 321 extends in the direction Y. In this embodiment, the printing device 40 is mounted on the movable device 30, and assembled to and driven by the slide mechanism 32 to move along the direction Y.

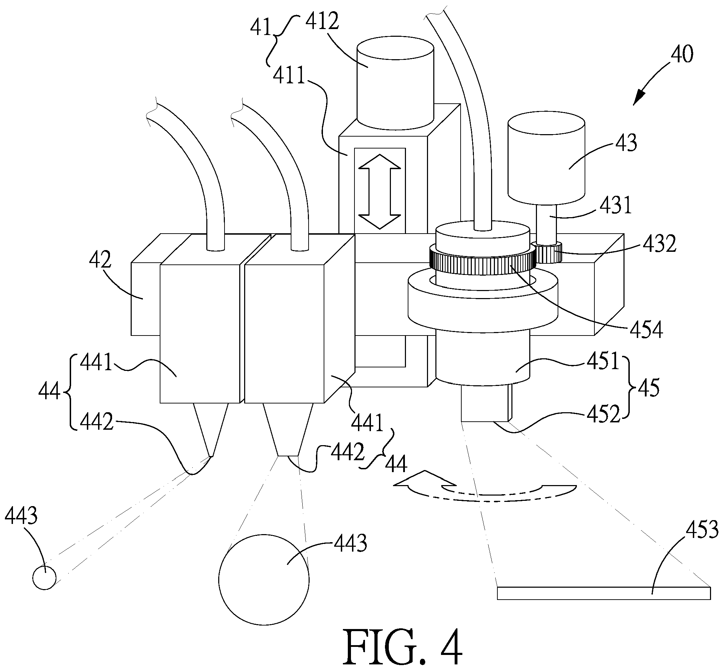

Fig. 1 illustrates the position of the printing device 40, and the detailed structure of the printing device 40 of the vamp 3D-printing system of the invention is shown in Fig. 4. The printing device 40 includes a lifting mechanism 41 connected to the slide mechanism 32, a mounting seat 42 connected to and moved together with the lifting mechanism 41, a motor 43 mounted on the mounting seat 42, at least one fixed printing head 44, and at least one rotatable printing head 45. The fixed printing head 44 includes a heating portion 441 and a spray nozzle 442 with an opening 443 having a round shape. The rotatable printing head 45 includes a heating portion 451 and a spray nozzle 452 with an opening 453 in the form of a slit. The heating portions 441, 451 are used to heat printable material, which enables the printable material to be smoothly outputted from the openings 443, 453 of the spray nozzles 442, 452. The motor 43 includes a drive shaft 431 with a drive toothed portion 432 at the end of the drive shaft 431. The rotatable printing head 45 includes a driven toothed portion 454. The motor 43 drives the rotatable printing head 45 to rotate via the engagement of the drive toothed portion 432 with the driven toothed portion 454. The lifting mechanism 41 has an operating direction defined as a direction Z. The lifting mechanism 41 moves in the direction Y along with the slide mechanism 32. The motor 43, the fixed printing head 44 and the rotatable printing head 45 move in the direction Y or Z along with the lifting mechanism 41 via the mounting seat 42.

In the first embodiment of the invention, the computer is electrically connected to the drive motor 13 of the conveying device 10, the slide mechanism 32 of the movable device 30, and the lifting mechanism 41, the motor 43, the fixed printing head 44 and the rotatable printing head 45 of the printing device 40, so as to control the conveying speed at which the vamp A is conveyed by the conveying device 10, then controls the slide mechanism 32 and the lifting mechanism 41 to move the fixed printing head 44 and the rotatable printing head 45 to the position where the vamp A is located to print a 3D-printing layer A1 on the surface of the vamp A.

What follows is the second embodiment of the vamp 3D-printing system of the invention. The detailed structures of the conveying device 10, the movable device 30 and the printing device 40 are the same as the first embodiment, and further explained would be omitted here. As shown in Fig. 2, the camera 70 is hung above the conveying belt 11 of the conveying device 10 by a suspension bracket 71, so that the camera 70 can scan the vamp A entering its video taking range to obtain the location information of the vamp A on the conveying device 10. With the computer electrically connected to the drive motor 13 of the conveying device 10, the slide mechanism 32 of the movable device 30, the camera 70, and the lifting mechanism 41, the motor 43, the fixed printing head 44 and the rotatable printing head 45 of the printing device 40, the computer can receive the location information, and calculate and process the location information by use of an image processing software, so as to create a coordinate instruction for turning on the drive motor 13 of the conveying device 10, and a printing-path instruction for instructing the motor 322 of the slide mechanism 32 and the fixed printing head 44 and the rotatable printing head 45 of the lifting mechanism 41 to perform 3D printing. The computer controls the rotation speed of the drive motor 13 of the conveying device 10 and the motor 322 of the slide mechanism 32, and the conveying speed that the vamp A is conveyed by the conveying device 10, which is used to cooperate with the lifting mechanism 41 of the printing device 40 which lifts and lowers the fixed printing head 44 and the rotatable printing head 45 to perform 3D printing.

The third embodiment of the vamp 3D-printing system of the invention is described as follows with reference to Figs. 3 and 5, in this embodiment, the printing system includes a work table 50, the printing device 4 as shown in Fig. 4, and a 2D (two dimensional) slide device 60 electrically connected to a computer. The work table 50 includes a work surface 51 and a cantilever 52 hung above the work surface 51. The printing device 40 is disposed at one end of the cantilever 52. The 2D slide device 60 includes a first slide assembly 601 and a second slide assembly 602 perpendicular to the first slide assembly 601. An operating direction of the first slide assembly 601 is in the direction Y, and an operation direction of the second slide assembly 602 is in the direction X. The second slide assembly 602 is disposed on and moves along with the first slide assembly 601. A retaining member 603 for carrying the vamp A is fixed at one side of the second slide assembly 602, and is driven by the first and second slide assemblies 601, 602 to move on the work surface 51 in a two dimensional manner along the directions X and Y. By such arrangements, the computer controls the lifting and lowering of the fixed and rotatable printing heads 44, 45, and controls the first and second slide assemblies 601, 602 to move the vamp A to a position aligned to the fixed and rotatable printing heads 44, 45 of the printing device 40, so as to print a 3D-printing layer A1 on the vamp A.

In this embodiment, the first slide assembly 601 of the 2D slide device 60 includes two parallel rails 61 disposed on the work surface 51 of the work table 50. A slide plate 62 has two ends connected to the two rails 61 via two slide blocks 621 disposed at two ends of the slide plate 62. The first slide assembly 601 includes a power source 63 disposed on the work surface 51 and connected to a middle section of the slide plate 62, so that the slide plate 62 is driven by the power source 63 to slide along the two rails 61. The second slide assembly 602 includes a rail 64 disposed on the slide plate 62 of the first slide assembly 601. The retaining member 603 is a slab structure and provided with two quick-release assemblies 604 at a lateral edge thereof, through which the retaining member 603 is connected to the rail 64 in a quick-lease manner. A power source 65 is disposed at one end of the rail 64 to drive the retaining member 603 to move along the rail 64. Preferably, the power source 63 of the first slide assembly 601 is a ball screw and includes a motor 631 driving a screw 632 to rotate with respect to a nut 633 disposed at the bottom of the middle section of the slide plate 62, causing the slide displacement of the slide plate 62 along the rails 61. The slide plate 62 of the first slide assembly 601 is provided with two assembling portions 622 at two ends thereof for connecting to two ends of the rail 64.

The printable material used by the vamp 3D-printing system of the invention is adhesive, primer or thermoplastic polyurethane elastomer (TPU), or their combination. The printable material is heated and melted by the heating portions 441, 451 of the fixed printing head 44 and the rotatable printing head 45, and sprayed from the spray nozzle 442 or 452 onto the surface of the vamp A to form the 3D-printing layer A1. The opening 443 having a round shape of the spray nozzle 442 of the fixed printing head 44 of the printing device 40 is suitable for printing lines. When the rotatable printing head 45 is rotated by the motor 43, the opening 453 in the form of a slit of the spray nozzle 452 of the rotatable printing head 45 can print marker-pen lines and produce a width-adjustable thin layer on the surface of the vamp A. The printing layer A1 printed on the vamp A by the vamp 3D-printing system of the invention has a certain thickness up to 0.3 mm.

It is to be noted that on the mounting seat 42 of the printing device 40 can be provided one or more fixed printing heads 44. When there are more than two fixed printing heads 44, different printable materials with different colors can be printed by different printing heads 44, and the spray nozzles 442 the printing heads 44 can have different openings 443 of different diameters, so as to print lines of different thicknesses.

While we have shown and described various embodiments in accordance with the present invention, it is clear to those skilled in the art that further embodiments may be made without departing from the scope of the present invention.

### Reference Numerals

- A: vamp
- A1: 3D printing layer
- 10: conveying device
- 11: conveying belt
- 12: roller
- 13: drive motor
- 20: fixing device
- 21: retaining member
- 22: fixing member
- 30: movable device
- 31: bridge frame
- 32: slide mechanm
- 321: rail
- 322: motor
- 40: printing device
- 41: lifting mechanism
- 411: ball screw
- 412: servo motor
- 42: mounting seat
- 43: motor
- 431: driven shaft
- 432: drive toothed portion
- 44: fixed printing head
- 441: heating portion
- 442: spray nozzle
- 443: opening
- 45: rotatable printing head
- 451: heating portion
- 452: spray nozzle
- 453: opening
- 454: driven toothed portion
- 50: work table
- 51: work surface
- 52: cantilever
- 60: 2D slide device
- 601: first slide assembly
- 61: rail
- 62: slide plate
- 621: slide block
- 622: assembling portion
- 63: power source
- 631: motor
- 632: screw
- 633: nut
- 602: second slide assembly
- 64: rail
- 65: power source
- 603: retaining member
- 604: quick-release assembly
- 70: camera
- 71: suspension bracket

## Claims

1. A vamp 3D-printing system used to perform 3D printing on a plurality of vamps, comprising a conveying device, a movable device, and a printing device electrically connected to a computer, wherein the conveying device includes a conveying belt, a direction extending between two ends of the conveying belt is defined as X, the vamps are conveyed in the direction X; the movable device includes a bridge frame bridging over the conveying belt, and a slide mechanism hung above the conveying belt by the bridge frame, an operating direction of the slide mechanism is defined as a direction Y; **characterized in that**:
the printing device includes a lifting mechanism connected to the slide mechanism, a mounting seat connected to and moved together with the lifting mechanism, a motor mounted on the mounting seat, at least one fixed printing head, and at least one rotatable printing head, the fixed printing head includes a spray nozzle with an opening, the opening has a round shape, the rotatable printing head includes a spray nozzle with an opening in the form of a slit, the motor includes a drive shaft with a drive toothed portion at one end of the drive shaft, the rotatable printing head includes a driven toothed portion, the motor drives the rotatable printing head to rotate via the engagement of the drive toothed portion with the driven toothed portion, the lifting mechanism has an operating direction defined as a direction Z, the lifting mechanism moves in the direction Y along with the slide mechanism, the motor, the fixed printing head and the rotatable printing head move in the direction Y or Z along with the lifting mechanism via the mounting seat;
by such arrangements, the computer controls the slide mechanism and the lifting mechanism to drive the fixed printing head, the rotatable printing head to move to a position aligned to the vamps, so as to print a 3D-printing layer on each of the vamps.

2. The vamp 3D-printing system as claimed in claim 1 further comprising a fixing device fixed on the conveying device to carry the vamps, wherein:
the conveying belt of the conveying device is provided with a roller at one end and a drive motor at another end thereof, and the conveying belt is driven by the drive motor to move the vamps in the direction X;
the fixing device includes a retaining member fixed to the conveying belt by a plurality of fixing members, so that the vamps are fixed on the retaining member and moved in the direction X;
the slide mechanism of the movable device includes a rail mounted on the bridge frame and a motor disposed at one end of the rail which extends in the direction Y, and serves to drive the mounting seat, and the printing head and the rotatable printing head mounted on the mounting seat to move along the direction Y;
the lifting mechanism includes a ball screw extending in the direction Z and a servo motor rotating the ball screw, the mounting seat is connected to the ball screw and moves in the direction Z;
the computer is electrically connected to the drive motor of the conveying device, the slide mechanism of the movable device, and the lifting mechanism, the motor, the fixed printing head and the rotatable printing head of the printing device, the computer controls the conveying speed at which the vamps are conveyed by the conveying device by controlling rotation speed of the drive motor of the conveying device and the motor of the slide mechanism, so as to cooperate with the lifting mechanism of the printing device to lift or lower the fixed printing head and the rotatable printing head to perform 3D printing.

3. The vamp 3D-printing system as claimed in claim 1 further comprising a camera, wherein the conveying belt of the conveying device is provided with a roller at one end and a drive motor at another end thereof, and the conveying belt is driven by the drive motor to move the vamps in the direction X;
the slide mechanism of the movable device includes a rail mounted on the bridge frame and a motor disposed at one end of the rail which extends in the direction Y, and serves to drive the mounting seat, and the printing head and the rotatable printing head mounted on the mounting seat to move along the direction Y;
the lifting mechanism includes a ball screw extending in the direction Z and a servo motor rotating the ball screw, the mounting seat is connected to the ball screw and moves in the direction Z;
the camera is hung above the conveying belt of the conveying device by a suspension bracket to scan the vamps entering the camera's video taking range, so as to obtain a location information of each of the vamps on the conveying device;
the computer is electrically connected to the drive motor of the conveying device, the slide mechanism of the movable device, the camera, and the lifting mechanism, the motor, the fixed printing head and the rotatable printing head of the printing device, the computer receives the location information, and calculates and processes the location information by the use of an image processing software, so as to create a coordinate instruction for turning on the drive motor of the conveying device, and a printing-path instruction for instructing the motor of the slide mechanism and the fixed printing head and the rotatable printing head of the lifting mechanism to perform 3D printing, the computer controls the conveying speed at which the vamps are conveyed by the conveying device by controlling rotation speed of the drive motor of the conveying device and the motor of the slide mechanism, so as to cooperate with the lifting mechanism of the printing device to lift or lower the fixed printing head and the rotatable printing head to perform 3D printing.

4. A vamp 3D-printing system used to perform 3D printing on a plurality of vamps, comprising a work table, a printing device, and a two-dimensional slide device electrically connected to a computer, the work table includes a work surface and a cantilever hung above the work surface, the printing device is disposed at one end of the cantilever, the two-dimensional slide device includes a first slide assembly and a second slide assembly perpendicular to the first slide assembly, an operating direction of the first slide assembly is defined as a direction Y, an operation direction of the second slide assembly is defined as a direction X, the second slide assembly is disposed on and moves along with the first slide assembly, a retaining member for carrying the vamps is fixed at one side of the second slide assembly, and is driven by the first and second slide assemblies to move on the work surface in a two dimensional manner along the directions X and Y; **characterized in that**:
the printing device includes a lifting mechanism disposed at one end of the cantilever, a mounting seat connected to and moved together with the lifting mechanism, a motor mounted on the mounting seat, at least one fixed printing head, and at least one rotatable printing head, the fixed printing head includes a spray nozzle with an opening, the opening has a round shape, the rotatable printing head includes a spray nozzle with an opening in the form of a slit, the motor includes a drive shaft with a drive toothed portion at one end of the drive shaft, the rotatable printing head includes a driven toothed portion, the motor drives the rotatable printing head to rotate via the engagement of the drive toothed portion with the driven toothed portion, the lifting mechanism has an operating direction defined as a direction Z, the motor, the fixed printing head and the rotatable printing head move in the direction Z along with the lifting mechanism via the mounting seat;
by such arrangements, the computer controls the first and second slide assemblies to move each of the vamps to a position aligned to the fixed and rotatable printing heads of the printing device, so as to print a 3D-printing layer on each of the vamps.

5. The vamp 3D-printing system as claimed in claim 4, wherein the first slide assembly of the two-dimensional slide device includes two parallel rails disposed on the work surface of the work table, a slide plate has two ends connected to the two rails via two slide blocks disposed at two ends of the slide plate, the first slide assembly includes a power source disposed on the work surface and connected to a middle section of the slide plate, so that the slide plate is driven by the power source to slide along the two rails, the second slide assembly includes a rail disposed on the slide plate of the first slide assembly, the retaining member is a slab structure and provided with two quick-release assemblies at a lateral edge thereof, so that the retaining member is connected to the rail by the two quick-release assemblies in a quick-lease manner, a power source is disposed at one end of the rail to drive the retaining member to move along the rail.

6. The vamp 3D-printing system as claimed in claim 5, wherein the power source of the first slide assembly is a ball screw and includes a motor driving a screw to rotate with respect to a nut disposed at a bottom of the middle section of the slide plate, causing a slide displacement of the slide plate along the rails, and the slide plate of the first slide assembly is provided with two assembling portions at two ends thereof for connecting to two ends of the rail.

7. The vamp 3D-printing system as claimed in claim 1 or 4, wherein the printing device is provided several fixed printing heads, and the spray nozzles of the printing heads have different openings of different diameters, so as to print lines of different thicknesses.

8. The vamp 3D-printing system as claimed in claim 1 or 4, wherein printable material used by the vamp 3D-printing system is adhesive, primer or thermoplastic polyurethane elastomer.

9. The vamp 3D-printing system as claimed in claim 1 or 5, wherein the printing layer printed on the vamps by the vamp 3D-printing system has a thickness up to 0.3 mm.

10. The vamp 3D-printing system as claimed in claim 1 or 4, wherein the fixed printing head includes a heating portion connected to the spray nozzle, the rotatable printing head includes a heating portion connected to the spray nozzle, and the heating portions are used to heat printable material.
